# EUROPEAN PATENT APPLICATION

(11) **EP 1 998 521 A1**
(43) Date of publication of application: **03.12.2008**
(21) Application number: 07010810.5
(22) Date of filing: 31.05.2007
(51) Int. Cl.: H04L 25/02

(54) **A power-efficient line driver in a digital subscriber line data transmission system**

(71) Applicant: Nokia Siemens Networks Oy, 02610 Espoo (FI)
(72) Inventor: Ahrndt, Thomas, Dr., 85521 Ottobrunn (DE)
(74) Representative: Schober, Ralf Stefan

(57) **Abstract**

A line driver for a Digital Subscriber Line (DSL) data transmission system, a DSL data transmission system comprising such a line driver and a method of driving a data signal in such a DSL transmission system, the line driver comprising an amplifier and a power supply selector connected to second and third power supply inputs of the amplifier, the power supply selector having a control input for receiving a power supply selection signal and being adapted to connect only one of the second or the third power supply inputs to the amplifier according to the power supply selection signal thereby providing either the second power supply voltage or the third power supply voltage to the amplifier.

## Description

The present invention relates to Digital Subscriber Line (DSL) data transmission systems, more specifically to a line driver for a DSL data transmission system, a DSL data transmission system comprising such a line driver, and to a method of driving a data signal in such a DSL data transmission system.

A growing number of households desire fast access to broadband data services such as fast internet access, IPTV (television programs provided via the internet connection), Voice-over-IP services etc. These services are commonly provided by telephone and internet carriers via DSL connections which allow for data rates up to dozens of megabits per second. Typically, a DSL connection delivers data between a DSL Access Multiplexer (DSLAM) and the subscribers' DSL modems via unshielded twisted pair copper telephone wires over a distance of up to 2 kilometres. Despite the limited properties of a twisted pair copper telephone wire, the high data rate may be achieved by dividing the channel into a plurality of frequency segments, each having a width of approximately 4 kHz. For each of the plurality of frequency segments, the DSL data transmission system determines a Signal-to-Noise Ratio (SNR) by means of a training sequence. The SNR also determines a bit rate allowable for the specific frequency segment. The data to be transmitted then is distributed between the frequency segments according to the bit rates allowable for each frequency segment. The individual data streams of the plurality of frequency segments are encoded using orthogonal sub-carriers in a conventional modulation scheme such as QAM (Quadrature Amplitude Modulation) and the encoded data streams are then added to yield the data signal to be transmitted over the twisted pair copper telephone wires. The resulting data signal is divided into a sequence of Discrete Multitone (DMT) symbols, each having a length equal to the reciprocal value of the width of the frequency segments (approximately 250 µs).

While the DMT Modulation or Orthogonal Frequency Division Multiplex (OFDM) scheme can cope with severe channel conditions, it has a downside in that the data signal to be transmitted over the twisted pair copper telephone wires can have a high dynamic range. A measure for this property of a data signal is the crest factor which is the ratio between the peak-amplitude of a signal and its root-mean-square value. Thus, a high crest factor denotes a signal having relatively low amplitudes with some spikes of much higher amplitudes interspersed.

In a typical DSL setup, a single DSLAM may provide access to a large number of subscribers living in the same neighbourhood by multiplexing from and to a high-speed internet backbone. Hence, in a DSLAM a large number of DSL data transmission systems and consequently a large number of line drivers may be present. It is desirable to provide access for as many subscribers as possible in a DSLAM of fixed dimensions, thus, the density of DSL data transmission systems and line drivers in a DSLAM should be high. However, the power dissipation of a DSL data transmission system and therefore the heat produced by a high number of DSL data transmission systems may limit packing density and may also determine maintenance cost for the DSLAM due to the energy costs incurred.

Therefore it is an object of the present invention to provide a line driver for a DSL data transmission system having a low power dissipation. It is further an object of the present invention to provide a DSL data transmission system having a low power dissipation and a driving method for such a DSL data transmission system.

A first aspect of the present invention provides a line driver for a Digital Subscriber Line (DSL) data transmission system. The line driver includes an amplifier having a signal input and a signal output, a first power supply input for receiving a first power supply voltage and providing the first power supply voltage to the amplifier, and a second power supply input for receiving a second power supply voltage different from the first power supply voltage. The line driver further comprises a third power supply input for receiving a third power supply voltage having a voltage between that of the first power supply voltage and that of the second power supply voltage and a power supply selector connected to the second and the third power supply inputs and to the amplifier. The power supply selector has a control input for receiving a power supply selection signal and is adapted to connect only one of the second or the third power supply inputs to the amplifier according to the power supply selection signal thereby providing either the second power supply voltage or the third power supply voltage to the amplifier.

The line driver according to the first aspect of the invention has the advantage that a power supply voltage may be selected that suffices for amplification of the data signal according to an amplitude of an input signal. E.g. when the amplitude of the present DMT symbol (or the part thereof) to be transmitted is low, a lower power supply voltage may be selected than when the amplitude is high. Thus, even though the line driver has to be able to drive a large signal and therefore requires a high power supply voltage, the far more frequent portions of the data signal that feature low amplitudes may be driven running from a lower power supply voltage. However, power dissipation directly depends on the power supply voltage and therefore may be reduced by using a higher power supply voltage only when needed. Thus, the line driver according to the first aspect of the present invention allows for a dynamic adaptation of the power supply voltage thereby greatly reducing power dissipation.

Since the crest factor in a typical DSL data transmission system is high, a voltage difference between the second power supply voltage and the first power supply voltage may at least be four times higher than a voltage difference between the third power supply voltage and the first power supply voltage. Thus, most of the operating time the line driver may run from the lower third power supply voltage and only for large amplitudes will have to run from the higher second power supply voltage.

To be more exhaustive, the second and third power supply voltage may be determined according to signal properties. The second power supply voltage needs to be sufficiently high to drive a maximum signal amplitude. If the third power supply voltage is comparatively low, the higher second power supply will be required more often because the probability of experiencing signal amplitudes higher than the third power supply voltage rises as the third power supply voltage decreases. On the other hand, if the third power supply voltage is set too high, the reduction of power dissipation will decrease because during times of low signal amplitudes too high a power supply voltage will be used constantly. Thus, in a preferred embodiment of the line driver, the voltage difference between the second power supply voltage and the first power supply voltage is 24 V and the voltage difference between the third power supply voltage and the first power supply voltage is chosen from a range from 3 to 6 V. This yields an optimal power consumption for the overall line driver in a typical use case.

Since differential signalling is commonly used in DSL data transmission systems, the amplifier preferably is a differential push-pull amplifier having a differential signal output.

In order to increase or decrease a voltage swing at the output of the line driver, the differential signal output of the amplifier may be connected to the primary winding of a transformer.

A second aspect of the present invention provides a DSL data transmission system comprising a line driver according to the first aspect of the invention.

The DSL data transmission system may further comprise an amplitude determination circuit having a data input adapted to receive a Discrete Multitone (DMT) symbol or a part of a DMT symbol to be driven by the line driver and an output connected to the control input of the power supply selector. The amplitude determination circuit may be adapted to determine an amplitude of the DMT symbol or the part of the DMT symbol, to compare the amplitude to a threshold value and to output a power supply selection signal to the power supply selector, the power supply selection signal signalling to the power supply selector that the third power supply voltage is to be provided to the amplifier if the amplitude is lower than the threshold value and that the second power supply voltage is to be provided to the amplifier else.

The DSL data transmission system according to the second aspect of the invention allows for a dynamic adaptation of the power supply voltage thereby greatly reducing power dissipation during operation of the DSL data transmission system.

The amplitude determined by the amplitude determination circuit preferably is a peak-to-peak value of the DMT symbol or of the part of the DMT symbol. The rate at which power supply voltages may be switched depends on the amount of data fed to the amplitude determination circuit at a time. If always one DMT symbol is fed to the amplitude determination circuit, the power supply voltages may be switched once for each DMT symbol (in a typical DSL setup approximately once every 250 µs). If only a part of a DMT symbol is fed to the amplitude determination circuit at a time, the power supply voltages may be switched more frequently thereby enabling a finer control of the power dissipation.

A third aspect of the present invention introduces a method of driving a data signal in a DSL transmission system. The method comprises the steps of:
providing an amplifier;
providing a first power supply voltage to the amplifier;
receiving a DMT symbol or a part of a DMT symbol to be driven by the amplifier;
determining an amplitude of the DMT symbol or of the part of the DMT symbol;
comparing the amplitude with a threshold value;
providing a second power supply voltage different from the first power supply voltage to the amplifier when the amplitude is greater or equal to the threshold value and providing a third power supply voltage having a voltage between that of the first power supply voltage and that of the second power supply voltage to the amplifier else; and
providing the DMT symbol or the part of the DMT symbol to the amplifier.

The method according to the third aspect of the invention allows for a dynamic adaptation of the power supply voltage in response to the current data signal to be transmitted thereby decreasing power dissipation.

Perferably, the amplitude is a peak-to-peak value of the DMT symbol or of the part of the DMT symbol.

A voltage difference between the second power supply voltage and the first power supply voltage may be at least four times higher than a voltage difference between the third power supply voltage and the first power supply voltage.

In a preferred embodiment of the driving method, the voltage difference between the second power supply voltage and the first power supply voltage is 24 V and the voltage difference between the third power supply voltage and the first power supply voltage is chosen from a range from 3 to 6 V.

The accompanying drawing, together with the specification, illustrates an exemplary embodiment of the present invention, and, together with the description, serves to explain the principles of the present invention.

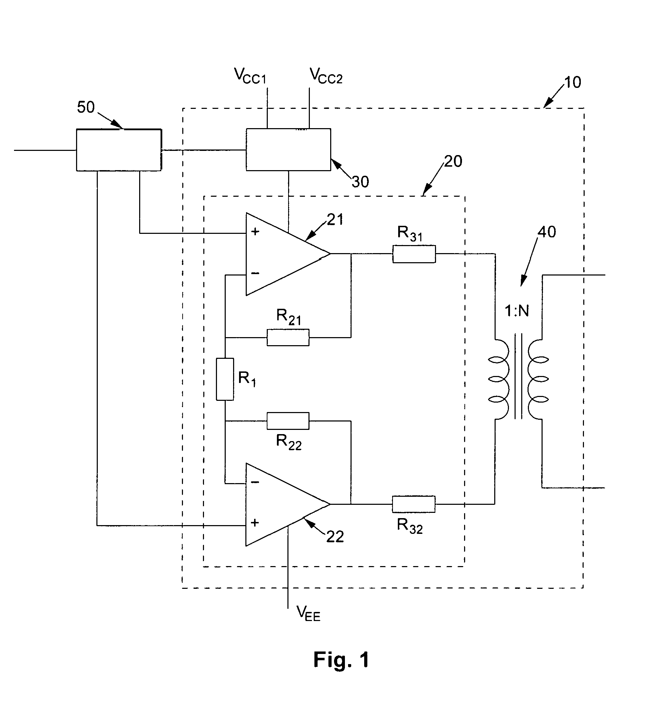

Fig. 1 illustrates a schematic diagram of a part of a DSL data transmission system according to the second aspect of the invention.

The DSL data transmission system comprises a line driver 10 according to the first aspect of the invention and an amplitude determination circuit 50. The line driver 10 includes a power supply voltage selector 30 which has a first power supply voltage input connected to a second power supply voltage V_{CC1} and a second power supply voltage input connected to a third power supply voltage V_{CC2}. The power supply voltage selector 30 further comprises a power supply voltage output connected to a power supply voltage input of an amplifier 20 which also forms part of the line driver 10 and a control input connected to the amplitude determination circuit 50.

The amplifier 20 is of the differential push-pull type comprising first and second operational amplifiers 21 and 22 whose non-inverting inputs provide a differential signal input of the line driver 10. The inverting inputs of the operational amplifiers are connected with each other via a resistor R₁ and their outputs are fed back in feedback loop comprising a resistor R₂₁ and R₂₂, respectively. In addition, the outputs of the operational amplifiers 21 and 22 are connected to a differential signal output of the line driver 10 via resistors R₃₁ and R₃₂, respectively. The value of resistance of resistors R₂₁ and R₂₂ and resistors R₃₁ and R₃₂, respectively, should be chosen to match each other. The voltage amplification of the differential push-pull amplifier 20 may be adjusted by changing the ratio between R₂₁ and R₃₁ and between R₂₂ and R₃₂. The amplifier 20 is further connected to a first power supply voltage V_{EE} which in the present example is a ground voltage.

The differential signal output of the amplifier 20 is connected to the primary winding of a transformer 40 which has a transformation factor of 1:N. Thus, by choosing an appropriate ratio N between the number of windings and the primary winding and the secondary winding, the voltage output by the amplifier 20 may be converted to a higher or lower overall output voltage of the line driver 10 as desired. Typically, a ratio N higher than one will be chosen in order to provide for high signal voltages that allow for transmission of data signals over the highly resistive unshielded twisted pair copper telephone wires commonly used for DSL connections. Furthermore, since a transformer may not output direct voltages, the output signal of the line driver 10 is dc-free. Thus, in the example of Fig. 1, power supply voltages of the line driver may be chosen freely with regard to their absolute values. While a first power supply voltage V_{EE} is a ground voltage, it could also be a negative voltage or a positive voltage. Therefore, the only important property of the first, second, and third power supply voltages is that the three power supply voltages differ from each other and that the third power supply voltage has a voltage value between that of the first and that of the second power supply voltage.

The amplitude determination circuit 50 receives a DMT symbol or a part of a DMT symbol to be transmitted and determines an amplitude of the DMT symbol or the part of the DMT symbol and compares the amplitude to a predetermined threshold value. If the amplitude is greater than the threshold voltage, the second power supply voltage V_{CC1} will have to be connected to the line driver 10 in order to enable the line driver 10 to drive the DMT symbol or the part of the DMT symbol which has a large amplitude. If the amplitude is lower than the threshold value, the third power supply voltage V_{CC2} should be connected to the line driver 10 for the transmission of the DMT symbol or the part of the DMT symbol which has a relatively small amplitude thereby decreasing power dissipation of the DSL data transmission system. Therefore, the amplitude determination circuit 50 comprises an output for a power selection signal which is connected to a control input of the power supply selector 30 of the line driver 10. The amplitude determination circuit 50 is adapted to dynamically signal the result of the comparison with the threshold value via a power selection signal to the power supply selector 30 thereby causing the power supply selector 30 to provide the appropriate power supply voltage to the amplifier 20. In the example of Fig. 1, the amplitude determination circuit 50 is adapted to determine a peak-to-peak amplitude of the DMT symbol or the part of the DMT symbol.

In the present example, the amplitude determination circuit 50 also comprises a linear Digital-to-Analogue Converter (DAC, not shown) which functions to convert the digitally encoded DMT symbol or the part of the DMT symbol to be transmitted to a differential analogue data signal which is passed on to the differential signal input of the line driver 10 via a differential signal output of the amplitude determination circuit 50. The amplitude determination circuit 50 may comprise logic to delay the output of the differential analogue data signal relatively to that of the power supply selection signal in order to allow the line driver 10 and its amplifier 20 to settle after switching the power supply voltage provided to the amplifier 20 between the second and third power supply voltage.

### References

- 10: line driver
- 20: amplifier
- 21: first operational amplifier
- 22: second operational amplifier
- 30: power supply selector
- 40: transformer
- 50: amplitude determination circuit
- R1: resistor
- R21: resistor
- R22: resistor
- R31: resistor
- R32: resistor
- V_{CC1}: second power supply voltage
- V_{CC2}: third power supply voltage
- V_{EE}: first power supply voltage

## Claims

1. A line driver (10) for a Digital Subscriber Line (DSL) data transmission system, the line driver (10) including:
an amplifier (20) having a signal input and a signal output;
a first power supply input for receiving a first power supply voltage and providing the first power supply voltage to the amplifier (20); and
a second power supply input for receiving a second power supply voltage different from the first power supply voltage,
**characterised in that** the line driver (10) further comprises:
a third power supply input for receiving a third power supply voltage having a voltage between that of the first power supply voltage and that of the second power supply voltage; and
a power supply selector (30) connected to the second and the third power supply inputs and to the amplifier (20), the power supply selector (30) having a control input for receiving a power supply selection signal and being adapted to connect only one of the second or the third power supply inputs to the amplifier (20) according to the power supply selection signal thereby providing either the second power supply voltage or the third power supply voltage to the amplifier (20).

2. The line driver (10) according to claim 1, wherein a voltage difference between the second power supply voltage and the first power supply voltage is at least four times higher than a voltage difference between the third power supply voltage and the first power supply voltage.

3. The line driver (10) according to claim 2, wherein the voltage difference between the second power supply voltage and the first power supply voltage is 24 V and the voltage difference between the third power supply voltage and the first power supply voltage is chosen from a range from 3 to 6 V.

4. The line driver (10) according to one of the preceding claims, wherein the amplifier (20) is a differential push-pull amplifier and wherein the signal output of the amplifier (20) is a differential signal output.

5. The line driver (10) according to claim 4, wherein the differential signal output of the amplifier (20) is connected to a primary winding of a transformer (40).

6. A Digital Subscriber Line (DSL) transmission system comprising a line driver (10) according to one of the preceding claims.

7. The DSL transmission system of claim 6, further comprising an amplitude determination circuit (50) having a data input adapted to receive a Discrete Multitone (DMT) symbol or a part of a DMT symbol to be driven by the line driver (10) and an output connected to the control input of the power supply selector (30), wherein the amplitude determination circuit (50) is adapted to determine an amplitude of the DMT symbol or the part of the DMT symbol, to compare the amplitude to a threshold value and to output a power supply selection signal to the power supply selector (30), the power supply selection signal signalling to the power supply selector (30) that the third power supply voltage is to be provided to the amplifier (20) if the amplitude is lower than the threshold value and that the second power supply voltage is to be provided to the amplifier (20) else.

8. The DSL transmission system of claim 7, wherein the amplitude is a peak-to-peak value of the DMT symbol or of the part of the DMT symbol.

9. A method of driving a data signal in a Digital Subscriber Line (DSL) transmission system comprising the steps of:
providing an amplifier (20);
providing a first power supply voltage to the amplifier (20);
receiving a Discrete Multitone (DMT) symbol or a part of a DMT symbol to be driven by the amplifier (20);
determining an amplitude of the DMT symbol or of the part of the DMT symbol;
comparing the amplitude with a threshold value;providing a second power supply voltage different from the first power supply voltage to the amplifier (20) when the amplitude is greater or equal to the threshold value and providing a third power supply voltage having a voltage between that of the first power supply voltage and that of the second power supply voltage to the amplifier (20) else; and
providing the DMT symbol or the part of the DMT symbol to the amplifier (20).

10. The method of claim 9, wherein the amplitude is a peak-to-peak value of the DMT symbol or of the part of the DMT symbol.

11. The method of one of claims 9 or 10, wherein a voltage difference between the second power supply voltage and the first power supply voltage is at least four times higher than a voltage difference between the third power supply voltage and the first power supply voltage.

12. The method according to claim 11, wherein the voltage difference between the second power supply voltage and the first power supply voltage is 24 V and the voltage difference between the third power supply voltage and the first power supply voltage is chosen from a range from 3 to 6 V.
